# EUROPEAN PATENT SPECIFICATION

(11) **EP 1 406 766 B1**
(45) Date of publication and mention of the grant of the patent: **17.10.2007**
(21) Application number: 02737162.4
(22) Date of filing: 24.05.2002
(51) Int. Cl.: B41J 2/175

(54) **ROBUST BIT SCHEME FOR A MEMORY OF A REPLACEABLE PRINTER COMPONENT**
ROBUSTES BITSCHEMA FÜR EINEN SPEICHER EINER AUSTAUSCHBAREN DRUCKERKOMPONENTE
SYSTEME DE BITS ROBUSTES POUR MEMOIRE DE COMPOSANT D'IMPRIMANTE REMPLA ABLE

(30) Priority: 25.05.2001 US 866040
(43) Date of publication of application: 14.04.2004
(73) Proprietor: Hewlett-Packard Company, Fort Collins, CO 80527-2400 (US)
(72) Inventor: SKENE, John, M., Lake Oswego, OR 07035 (US); SHEPHERD, Matthew, A., Vancouver, WA 98682 (US); HUME, Garrard, Corvallis, OR 97330 (US)
(74) Representative: Jackson, Richard Eric
(86) International application number: PCT/US2002/016507
(87) International publication number: WO 2002/096655

(56) References cited:
- EP-A- 0 956 963
- EP-A- 1 027 986
- EP-A- 1 078 759
- EP-A- 1 080 917
- EP-A- 1 136 268

## Description

### The Field of the Invention

The present invention relates to printers and to memories for printers. More particularly, the invention relates to a robust bit scheme for a memory of a replaceable printer component.

### Background of the Invention

The art of inkjet technology is relatively well developed. Commercial products such as computer printers, graphics plotters, and facsimile machines have been implemented with inkjet technology for producing printed media. Generally, an inkjet image is formed pursuant to precise placement on a print medium of ink drops emitted by an ink drop generating device known as an inkjet printhead assembly. An inkjet printhead assembly includes at least one printhead. Typically, an inkjet printhead assembly is supported on a movable carriage that traverses over the surface of the print medium and is controlled to eject drops of ink at appropriate times pursuant to command of a microcomputer or other controller, wherein the timing of the application of the ink drops is intended to correspond to a pattern of pixels of the image being printed.

Inkjet printers have at least one ink supply. An ink supply includes an ink container having an ink reservoir. The ink supply can be housed together with the inkjet printhead assembly in an inkjet cartridge or pen, or can be housed separately. When the ink supply is housed separately from the inkjet printhead assembly, users can replace the ink supply without replacing the inkjet printhead assembly. The inkjet printhead assembly is then replaced at or near the end of the printhead life, and not when the ink supply is replaced.

Current printer systems typically include one or more replaceable printer components, including inkjet cartridges, inkjet printhead assemblies, and ink supplies. Some existing systems provide these replaceable printer components with on-board memory to communicate information to a printer about the replaceable component. The on-board memory, for an inkjet cartridge for example, may store information such as pen type, unique pen code, ink fill level, marketing information, as well as other information. Such a memory may also store other information about the ink container, such as current ink level information. The ink level information can be transmitted to the printer to indicate the amount of ink remaining. A user can observe the ink level information and anticipate the need for replacing a depleted ink container.

If the data received by a printer from a printer component memory contains an error, the printer may perform an incorrect action, or may be unable to use the printer component. Such an error may be the result of a short circuit or open circuit in an address line coupling the memory to other printer components, such as a printer controller, or from some other problem.

It is desirable to have a memory scheme that is more robust than current memory schemes used in replaceable printer components to detect and correct errors and provide uninterrupted operation.

EP 1027 986 A describes a print head unit having head identification information determined on the basis of characteristics that vary according to the manufacturing history of the print head unit and also a printer that operates according to printing parameters determined by the head identification information.

### Summary of the Invention

In a first aspect, the present invention provides a method of detecting an error in data received from a memory of a replaceable inkjet printer component of a printer, the memory including a plurality of bits, the printer including a plurality of electrically conductive lines, at least one of the electrically conductive lines associated with each bit, the method comprising: providing a first parity bit associated with a first data item, the first data item and the first parity bit stored in the memory; reading the first data item and the first parity bit from the memory; performing an electrical test of at least one of the electrically conductive lines; and identifying an error in the first data item based on the first parity bit read from the memory and the electrical test.

In another aspect, the present invention provides a replaceable printer component for a printing system according to claim 13.

### Brief Description of the Drawings

Figure 1 is an electrical block diagram of major components of an inkjet printer according to the present invention.
Figure 2 is a diagram illustrating the ROM of the printer shown in Figure
Figure 3 is a table illustrating information stored in an inkjet cartridge memory according to the present invention.
Figure 4A is a schematic diagram of a circuit for defining the state of a fusible bit of an inkjet cartridge memory of the present invention.
Figure 4B is a schematic diagram of a circuit for defining the state of a masked bit of an inkjet cartridge memory of the present invention.
Figure 5A is a table illustrating two examples of bit assignments in an inkjet cartridge memory according to the present invention.
Figure 5B is a table illustrating the bit assignments of Figure 5A after an error has occurred.

### Description of the Preferred Embodiments

In the following detailed description of the preferred embodiments, reference is made to the accompanying drawings that form a part hereof, and in which is shown by way of illustration specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

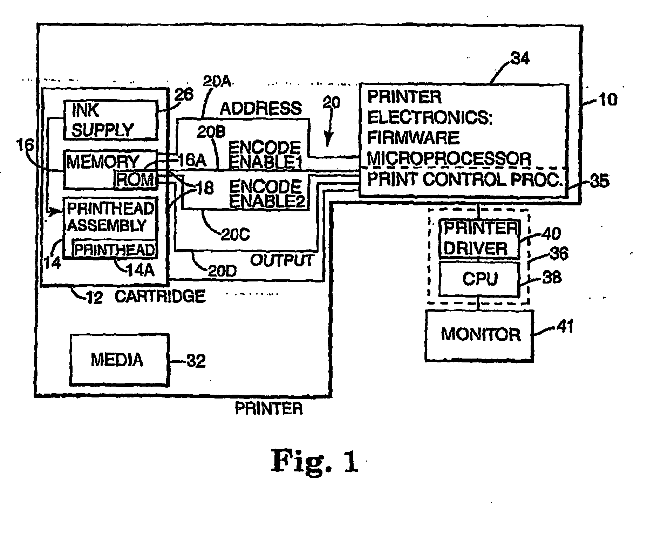

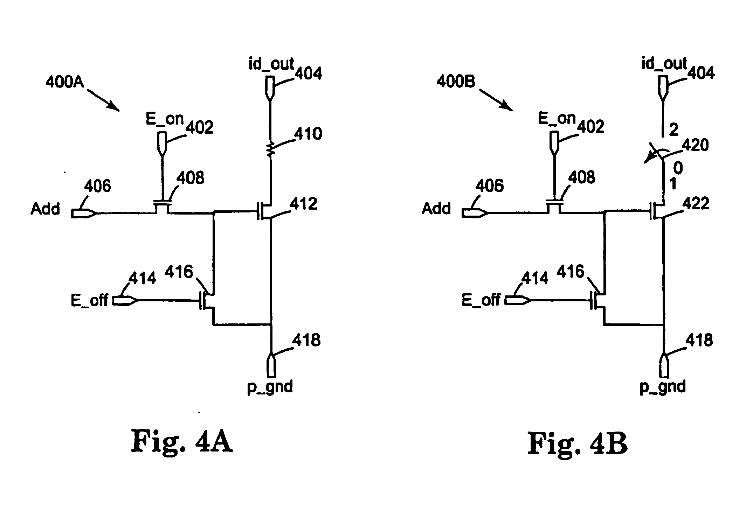

Figure 1 is an electrical block diagram of major components of an inkjet printer according to the present invention. Inkjet printer 10 includes removable inkjet cartridge 12, which includes an inkjet printhead assembly 14, an integrally mounted memory 16, and an ink supply 26. Inkjet cartridge 12 is pluggably removable from printer 10 via interconnects 18. Inkjet printhead assembly 14 includes at least one printhead 14A. Memory 16 may include multiple forms of memory, including RAM, ROM and EEPROM, and stores data associated with inkjet printhead assembly 14 and ink supply 26. In one embodiment, memory 16 includes factory-written data and printer-recorded data. In one embodiment, memory 16 includes a 26-bit ROM 16A, having 13 fusible bits, and 13 masked bits. In an alternative embodiment, all 26 bits are fusible bits. In another form of the present invention, all 26 bits are masked bits. ROM 16A can also include a different number of total bits, other than 26 bits. An advantage of using both fusible and masked bits is that a size reduction in ROM 16A may be obtained. Each fusible bit may be set by blowing a resistor in a circuit 400A (shown in Figure 4A) representing the fusible bit. Each masked bit may be set by adding a resistor in a circuit 400B (shown in Figure 4B) representing the masked bit. In one embodiment, ROM 16A is integrated with inkjet printhead assembly 14. In an alternative embodiment, ROM 16A may be integrated with ink supply 26. It will be understood by one of ordinary skill in the art that, rather than incorporating inkjet printhead assembly 14 and ink supply 26 into an inkjet cartridge 12, inkjet printhead assembly 14 and ink supply 26 may be separately housed and may include separate memories.

Printer 10 includes communication lines 20 for communications between inkjet cartridge 12 and controller 34. Communication lines 20 specifically include address lines 20A, first encode enable line 20B, second encode enable line 20C, and output line 20D, which are all connected to ROM 16A. In one embodiment, address lines 20A include 13 address lines. First encode enable line 20B is used to select fusible bits in ROM 16A, and second encode enable line 20C is used to select masked bits in ROM 16A. Address lines 20A are used to select a particular fusible bit or masked bit. The value of a selected fusible or masked bit is read by sensing the output on output line 20D.

Inkjet printhead assembly 14, memory 16, and ink supply 26 are connected to controller 34, which includes both electronics and firmware for the control of the various printer components or sub-assemblies. A print control procedure 35, which may be incorporated in the printer driver, causes the reading of data from memory 16 and adjusts printer operation in accordance with the data accessed from memory 16. Controller 34 controls inkjet printhead assembly 14 and ink supply 26 to cause ink droplets to be ejected in a controlled fashion on print media 32.

A host processor 36 is connected to controller 34, and includes a central processing unit (CPU) 38 and a software printer driver 40. A monitor 41 is connected to host processor 36, and is used to display various messages that are indicative of the state of inkjet printer 10. Alternatively, printer 10 can be configured for stand-alone or networked operation wherein messages are displayed on a front panel of the printer.

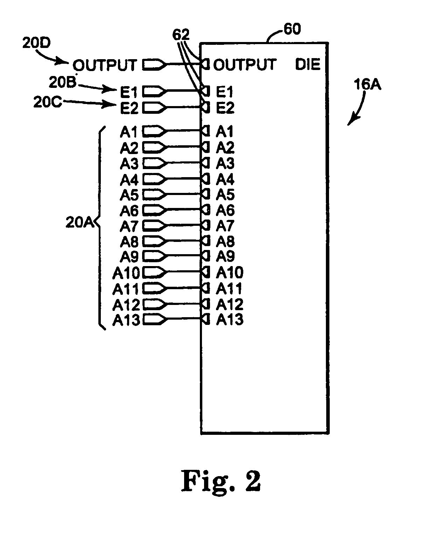

Figure 2 is a diagram illustrating ROM 16A of Figure 1 in additional detail. ROM 16A includes semiconductor die 60 having a plurality of pads 62. Address lines 20A, first encode enable line (E1) 20B, second encode enable line (E2) 20C, and output line 20D are coupled to semiconductor die 60 via pads 62. Address lines 20A include 13 address lines (A1-A13). In one embodiment, ROM 16A includes other electrical connections (not shown), including ground connections.

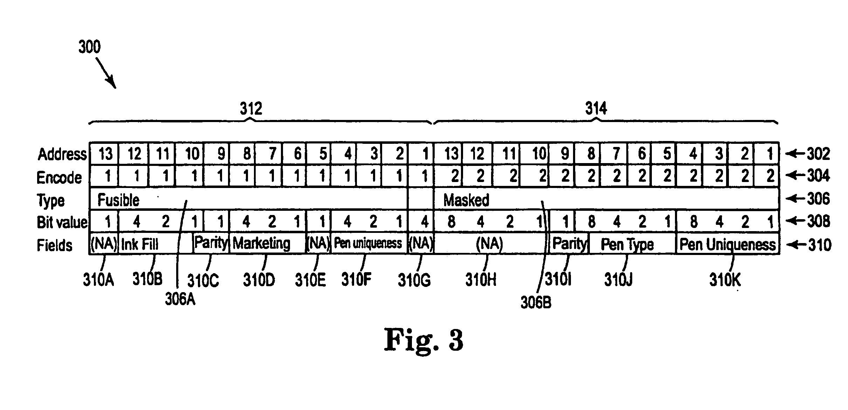

Figure 3 is a table illustrating information stored in ROM 16A according to the present invention. Table 300 includes address line identifiers 302, encode enable line identifiers 304, bit type identifiers 306A and 306B (collectively referred to as bit type identifiers 306), bit values 308, and fields 310. Table 300 is divided into portion 312 and portion 314. Portion 312 of table 300 represents information associated with fusible bits, as indicated by fusible type identifier 306A. Portion 314 of table 300 represents information associated with masked bits, as indicated by masked type identifier 306B. As mentioned above, rather than using both fusible and masked bits, all bits in ROM 16A may be fusible bits, or all bits in ROM 16A may be masked bits. Each one of the address line identifiers 302 represents one of address lines 20A, and corresponds to either a fusible bit or a masked bit. Both the fusible and the masked bits are numbered 1-13, indicating the particular address line 20A associated with the bit. Encode enable line identifiers 304 indicate the encode enable line 20B or 20C that must be set in order to select the corresponding bit. A "1" in encode enable line identifiers 304 corresponds to first encode enable line 20B, which is used to select fusible bits. A "2" in encode enable line identifiers 304 corresponds to second encode enable line 20C, which is used to select masked bits.

Fusible bits 1-13 and masked bits 1-13 are divided into a plurality of fields 310. Each bit in a particular field 310 includes a bit value 308. When a bit is set, it has the value indicated in its corresponding bit value 308. When a bit is not set, it has a value of 0. In one embodiment, fusible bits 1-13 and masked bits 1-13 are set during manufacture of ROM 16A.

Field 310A includes fusible bit 13. In one embodiment, fusible bit 13 is not used to store data, so field 310A includes the letters "NA" (i.e., not assigned).

Ink fill field 310B includes fusible bits 10-12. In one embodiment, fusible bits 10-12 provide a reference level or trigger level to determine when a low ink warning should be displayed.

Parity field 310C includes fusible bit 9. In one embodiment, fusible bit 9 is a parity bit used in association with the bits corresponding to marketing field 310D. In an alternative embodiment, fusible bit 9 is a parity bit used in association with multiple ones of the fields 310. Fusible bit 9 may also be used in association with memory bits associated with another printer component, such as ink supply 26.

Marketing field 310D includes fusible bits 6-8. In one embodiment, fusible bits 6-8 are used to identify whether an inkjet cartridge can be used in a particular printer.

Field 310E includes fusible bit 5. In one embodiment, fusible bit 5 is not used to store data, so field 310E includes the letters "NA" (i.e., not assigned).

Pen uniqueness field 310F includes fusible bits 2-4. In one embodiment, fusible bits 2-4 represent a random number that uniquely identifies an inkjet cartridge, which allows printer controller 34 to determine when a new inkjet cartridge has been installed.

Field 310G includes fusible bit 1. In one embodiment, fusible bit 1 is not used to store data, so field 310G includes the letters "NA" (i.e., not assigned).

Field 310H includes masked bits 10-13. In one embodiment, masked bits 10-13 are not used to store data, so field 310H includes the letters "NA" (i.e., not assigned).

Field 310I includes masked bit 9. In one embodiment, masked bit 9 is a parity bit used in association with the bits corresponding to pen type field 310J. In an alternative embodiment, masked bit 9 is a parity bit used in association with multiple ones of the fields 310. Masked bit 9 may also be used in association with memory bits associated with another printer component, such as ink supply 26.

Pen type field 310J includes masked bits 5-8. In one embodiment, masked bits 5-8 provide an identification of the type of inkjet cartridge that is associated with the memory.

Pen uniqueness field 310K includes masked bits 1-4. In one embodiment, masked bits 1-4 represent a random number that uniquely identifies a particular inkjet cartridge, which allows printer controller 34 to determine when a new inkjet cartridge has been installed.

Figure 4A is a schematic diagram of a circuit for defining the state of a fusible bit in ROM 16A. Circuit 400A includes first encode enable input (E_on) 402, output (id_out) 404, address input 406, transistor 408, resistor 410, transistor 412, second encode enable input (E_off) 414, transistor 416, and ground (p_gnd) 418. Address input 406 is coupled to one of address lines 20A (shown in Figure 1). First encode enable input 402 is coupled to first encode enable line 20B (shown in Figure 1). Second encode enable input 414 is coupled to second encode enable line 20C (shown in Figure 1). Output 404 is coupled to output line 20D (shown in Figure 1).

In one embodiment, each of transistors 408, 412 and 416 is a field effect transistor (FET). Address input 406 is coupled to the drain of transistor 408. First encode enable input 402 is coupled to the gate of transistor 408. The source of transistor 408 is coupled to the gate of transistor 412 and the drain of transistor 416. The gate of transistor 416 is coupled to second encode enable input 414. The drain of transistor 416 is coupled to the source of transistor 408 and the gate of transistor 412. The source of transistor 416 is coupled to ground 418. Resistor 410 is positioned between output 404 and the drain of transistor 412. The source of transistor 412 is coupled to ground 418.

A fusible bit in ROM 16A, such as the bit represented by circuit 400A, is read by setting first encode enable input 402 high, setting address input 406 high, and sensing the signal at output 404. First encode enable input 402 is set high by controller 34 by setting first encode enable line 20B high. Address input 406 is set high by controller 34 by setting the address line 20A coupled to address input 406 high. The output voltage at output 404 is sensed by controller 34 by sensing the voltage on output line 20D.

Transistor 408 acts as an AND gate, with inputs 402 and 406. If inputs 402 and 406 are both high, a current flows through transistor 408, turning on transistor 412. Transistor 412 acts as a drive transistor, driving output 404. If resistor 410 is blown, the voltage at output 404 will be high, indicating a logical 1. If resistor 410 is not blown, the voltage at output 404 will be low, indicating a logical 0. Transistor 416 is used as an active pull down to prevent leakage current from transistor 408 from turning on transistor 412 when transistor 412 should be off. Transistor 416 is turned on by setting second encode enable input 414 high. When turned on, transistor 416 diverts current from transistor 408 to ground.

In one embodiment, transistors 408 and 416 each have a length of about 4 micrometers and a width of about 15.5 micrometers, and transistor 412 has a length of about 4 micrometers and a width of about 600 micrometers. In one embodiment, resistor 410 has a resistance of over about 1000 ohms when blown, and a resistance of under about 400 ohms when not blown. In addition to blowing resistor 410, other methods may be used to create an open circuit to define the state of a bit in ROM 16A, including mechanical cutting, laser cutting, as well as other methods.

Figure 4B is a schematic diagram of a circuit for defining the state of a masked bit in ROM 16A. Circuit 400B is substantially the same as circuit 400A shown in Figure 4A, with the exceptions that resistor 410 is replaced by switch 420, and transistor 422 includes different properties than transistor 412. In one embodiment, switch 420 is not an actual physical switch, but represents either the presence or absence of a resistor. If a resistor is present in place of switch 420, the resistor has sufficient resistance to act as an open circuit between output 404 and transistor 422. If a resistor is not present in place of switch 420, there is no additional resistance between output 404 and transistor 422. In one embodiment, transistor 422 is a field effect transistor (FET), with a length of about 4 micrometers and a width of about 100 micrometers.

Address input 406 is coupled to one of address lines 20A (shown in Figure 1). First encode enable input 402 is coupled to second encode enable line 20C (shown in Figure 1). Second encode enable input 414 is coupled to first encode enable line 20B (shown in Figure 1). Output 404 is coupled to output line 20D (shown in Figure 1).

Address input 406 is coupled to the drain of transistor 408. First encode enable input 402 is coupled to the gate of transistor 408. The source of transistor 408 is coupled to the gate of transistor 422 and the drain of transistor 416. The gate of transistor 416 is coupled to second encode enable input 414. The drain of transistor 416 is coupled to the source of transistor 408 and the gate of transistor 422. The source of transistor 416 is coupled to ground 418. Switch 420 is positioned between output 404 and the drain of transistor 422. The source of transistor 422 is coupled to ground 418.

A masked bit in ROM 16A, such as the bit represented by circuit 400B, is read by setting first encode enable input 402 high, setting address input 406 high; and sensing the signal at output 404. First encode enable input 402 is set high by controller 34 by setting second encode enable line 20C high. Address input 406 is set high by controller 34 by setting the address line 20A coupled to address input 406 high. The output voltage at output 404 is sensed by controller 34 by sensing the voltage on output line 20D.

Transistor 408 acts as an AND gate, with inputs 402 and 406. If inputs 402 and 406 are both high, a current flows through transistor 408, turning on transistor 422. Transistor 422 acts as a drive transistor, driving output 404. If switch 420 is open (i.e., resistor present), the voltage at output 404 will be high, indicating a logical 1. If switch 420 is closed (i.e., resistor not present), the voltage at output 404 will be low, indicating a logical 0. Transistor 416 is used as an active pull down to prevent leakage current from transistor 408 from turning on transistor 422 when transistor 422 should be off. Transistor 416 is turned on by setting second encode enable input 414 high. When turned on, transistor 416 diverts current from transistor 408 to ground.

In ROM 16A of the present invention, fusible and masked bits may be further classified as either functional or informational. Functional bit fields must match values expected by the printer for proper operation. An example of a functional bit field is pen type field 310J. If the bits corresponding to pen type field 310J indicate a type of inkjet cartridge that is not compatible with the printer, the printer may disable the inkjet cartridge. Thus, an error in pen type field 310J could cause the printer to improperly disable an inkjet cartridge. Informational bit fields are not critical to proper operation and may be ignored, or action may be taken based on incorrect information in an informational bit field without causing a stoppage in operation. Examples of informational bit fields include pen uniqueness fields 310F and 310K.

Short circuits caused by stray ink ("ink shorts") in an inkjet cartridge ROM 16A typically occur more frequently toward the edges of the semiconductor die 60 (shown in Figure 2). Pads 62 that are positioned near the edges of semiconductor die 60 tend to suffer from corrosion, potentially causing electrical failures. In one embodiment, functional bits and other important bits, such as parity bits, are positioned toward the center of semiconductor die 60 to reduce the likelihood of ink shorts with respect to these bits, and thereby provide a more robust ROM 16A. In one embodiment, marketing bits 310D, pen type bits 310J, and parity bits 310C and 310I are positioned substantially near the center of semiconductor die 60.

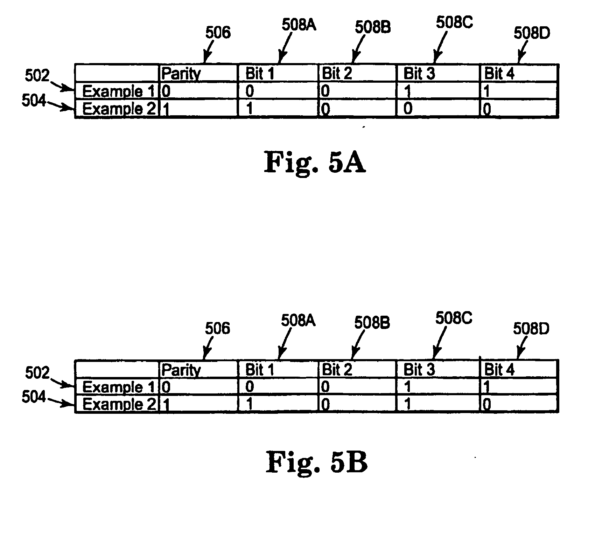

In one embodiment, to further improve the robustness of an inkjet cartridge ROM 16A according to the present invention, parity bits are assigned to important bit fields, including functional bit fields. As shown in Figure 3, a parity bit 310C is assigned to marketing bit field 310D, and a parity bit 310I is assigned to pen type bit field 310J. The use of parity bits, such as parity bits 310C and 310I, to improve the robustness of an inkjet cartridge ROM, is discussed in further detail below with reference to figures 5A and 5B.

Figure 5A is a table illustrating two examples of bit assignments in an . inkjet cartridge ROM according to the present invention. The table includes lines 502 and 504, and columns 506 and 508A-D. Column 506 includes the value of a parity bit for each example, such as parity bit 310C or 310I. Columns 508A-D include the value of bits in a data bit field for each example, such as marketing field 310D or pen type field 310J. In Example 1, shown on line 502, the parity bit is set to 0, bit 1 is set to 0, bit 2 is set to 0, bit 3 is set to 1, and bit 4 is set to 1. In Example 2, shown on line 504, the parity bit is set to 1, bit 1 is set to 1, bit 2 is set to 0, bit 3 is set to 0, and bit 4 is set to 0.

In one embodiment, even parity is used in determining what value to assign to the parity bits. Since bits 1-4 in Example 1 add up to an even number, the parity bit for Example 1 is set to 0 to maintain an even number for the sum of bits 1-4 and the parity bit. Since bits 1-4 in Example 2 add up to an odd number, the parity bit for Example 2 is set to 1 to produce an even number for the sum of bits 1-4 and the parity bit. In an alternative embodiment, odd parity is used rather than even parity.

Figure 5B is a table illustrating the bit assignments of Figure 5A after an error in the data bit fields has occurred. It is assumed in Figure 5B that an ink short has occurred in the address line 20A corresponding to data bit 3. Controller 34 determines whether any of address lines 20A has a short circuit or open circuit by electrically testing each of address lines 20A. In one embodiment, the electrical test includes a check for continuity. Techniques for testing electrically conductive lines and electric circuits are known to those of ordinary skill in the art. After electrically testing address lines 20A, controller 34 determines that the address line 20A corresponding to bit 3 has a short. When an ink short occurs in an address line, the output read by controller 34 will be a 1, regardless of whether the bit was a 1 prior to the ink short. Thus, bit 3 is a 1 for both Example 1 and Example 2 in Figure 5B, even though bit 3 in Example 2 should be a 0 as shown in Figure 5A.

In Example 1, controller 34 examines the parity bit to determine if the data bit field contains an error. Since the sum of bits 1-4 and the parity bit is an even number, controller 34 determines that the data bit field does not contain an error.

In Example 2, after examining the parity bit to determine if the data bit field contains an error, controller 34 determines that an error occurred, since the sum of bits 1-4 and the parity bit is an odd number, and even parity is being used. Based on the electrical test of the address line corresponding to bit 3, which indicated an ink short, and the determination from the parity test that an error occurred, controller 34 determines that bit 3 should be a 0, and corrects the bit accordingly. Thus, the error does not cause an interruption in the operation of printer 10.

Although specific embodiments have been illustrated and described herein for purposes of description of the preferred embodiment, it will be appreciated by those of ordinary skill in the art that a wide variety of alternate and/or equivalent implementations may be substituted for the specific embodiments shown and described without departing from the scope of the present invention. Those with skill in the chemical, mechanical, electromechanical, electrical, and computer arts will readily appreciate that the present invention may be implemented in a very wide variety of embodiments. This application is intended to cover any adaptations or variations of the preferred embodiments discussed herein. Therefore, it is manifestly intended that this invention be limited only by the claims.

## Claims

1. A method of detecting an error in data received from a memory of a replaceable printer component (12) of a printer (10), the memory (16) including a plurality of bits, the printer (10) including a plurality of electrically conductive lines (20), at least one of the electrically conductive lines (20) associated with each bit, the method comprising:
providing a first parity bit (310C) associated with a first data item (310B), the first data item (310B) and the first parity bit (310C) stored in the memory (16);
reading the first data item (210B) and the first parity bit (310C) from the memory (16) ;
performing an electrical test of at least one of the electrically conductive lines (20); and
identifying an error in the first data item (310B) based on the first parity bit (310C) read from the memory and the electrical test.

2. The method of claim 1, and further comprising:
identifying an electrical short circuit in at least one of the electrically conductive lines based on the electrical test, and wherein the error in the first data item is identified based on the first parity bit read from the memory and the identified electrical short circuit.

3. The method of claim 1, and further comprising:
identifying an open circuit in at least one of the electrically conductive lines based on the electrical test, and wherein the error in the first data item is identified based on the first parity bit read from the memory and the identified open circuit.

4. The method of claim 1, wherein the electrically conductive lines are address lines coupling the memory to a controller of the printer.

5. The method of claim 1, wherein the memory is a ROM.

6. The method of claim 1, and further comprising:
determining whether the replaceable printer component is appropriate for use in the printer based on the first data item.

7. The method of claim 1, and further comprising:
determining a type of the replaceable printer component installed in the printer based on the first data item.

8. The method of claim 7, and further comprising:
determining a type of cartridge installed in the printer based on the first data item.

9. The method of claim 1, and further comprising:
providing a second parity bit associated with a second data item, the second data item and the second parity bit stored in the memory;
reading the second data item and the second parity bit from the memory;
determining whether an error is contained in the second data item based on the second parity bit read from the memory.

10. The method of claim 1, wherein the memory is integrated with a cartridge.

11. The method of claim 1, wherein the memory is integrated with a printhead assembly.

12. The method of claim 1, wherein the memory is integrated with an ink supply.

13. A replaceable printer component (12) for a printing system having a controller (35), the replaceable printer component (12) comprising:
an information storage device (16) storing a first parity bit (310C) and a first data item (310B), the first parity bit (310C) associated with the first data item (310B), the first parity bit (310C) for use by a controller (35) in conjunction with an electrical test of electrically conductive lines (20) coupled to the information storage device (16) to identify an error in the first data item (310B).

14. The replaceable printer component of claim 13, wherein the electrically conductive lines are address lines.

15. The replaceable printer component of claim 13, wherein the information storage device comprises a ROM (16A).

16. The replaceable printer component of claim 13, wherein the information storage device includes a semiconductor die (60) and a plurality of circuits formed on the semiconductor die, each circuit associated with and indicating the state of a bit in the information storage device.

17. The replaceable printer component of claim 16, wherein the circuits associated with the first data item are positioned substantially near a center of the semiconductor die.

18. The replaceable printer component of claim 16, wherein the circuit associated with the first parity bit is positioned substantially near a center of the semiconductor die.

19. The replaceable printer component of claim 13, wherein the first data item indicates to the controller whether a printer component is appropriate for use in the printing system.

20. The replaceable printer component of claim 13, wherein the replaceable printer component is a cartridge (12).

21. The replaceable printer component of claim 13, wherein the replaceable printer component includes a printhead assembly (14).

22. The replaceable printer component of claim 13, wherein the replaceable printer component includes an ink supply (26).

23. The replaceable printer component of claim 13, wherein the first data item indicates a type of a printer component installed in the printing system.

24. The replaceable printer component of claim 23, wherein the first data item indicates the type of one of the following printer components:
a cartridge (16);
a printhead assembly (14) ; or
an ink supply (26).

25. The replaceable printer component of claim 13, wherein the information storage device stores a second parity bit and a second data item, the second parity bit associated with the second data item, the second parity bit for use by the controller to determine whether an error is contained in the second data item.

26. A printing system employing the replaceable printer component of claim 13, further comprising:
a controller coupled to the information storage device by the plurality of electrically conductive lines, the controller responsive to output of the information storage device, that includes that controller configured to perform an electrical test of at least one of the electrically conductive lines, the processor configured to identify an error in the first data item based on the first parity bit and the electrical test.

27. The printing system of claim 26, wherein the controller is configured to identify an electrical short circuit in at least one of the electrically conductive lines based on the electrical test, and wherein the controller is configured to identify the error in the first data item based on the first parity bit and the identified electrical short circuit.

28. The printing system of claim 26, wherein the controller is configured to identify an open circuit in at least one of the electrically conductive lines based on the electrical test, and wherein the controller is configured to identify the error in the first data item based on the first parity bit and the identified open circuit.

29. The printing system of claim 26. wherein the controller is configured to determine whether a printer component is appropriate for use in the printing system based on the first data item.

30. The printing system of claim 26. wherein the controller is confirmed to determine a type of a printer component installed in the printing system based on the first data item.

31. The printing system of claim 30, wherein the controller is configured to determine, based on the first data item, the type of one of the following printer components:
a cartridge (16);
a printhead assembly (14); or
an ink supply (26).

32. The printing system of claim 26, and wherein the controller is configured to determine whether an error is contained in the second data item based on the second parity bit.

33. The printing system of claim 26, wherein the controller is configured to correct the error in the first data item based on the electrical test and the first parity bit

34. The replaceable printer component of claim 20, further comprising:
a printhead assembly having at least one printhead for selectively depositing ink drops on print media; and
an ink supply for storing ink to be provided to the printhead.

35. The replaceable printer component of claim 34, wherein the electrically conductive lines are address lines.

36. The replaceable printer component of claim 34, wherein the information storage device is a ROM.

37. The replaceable printer component of claim 36, wherein the ROM includes a semiconductor die and a plurality of circuits formed on the semiconductor die, each circuit associated with and indicating the state of a bit in the ROM.

38. The replaceable printer component of claim 37, wherein the circuits associated with the first data item are positioned substantially near a center of the semiconductor die.

39. The replaceable printer component of claim 37, wherein the circuit associated with the first parity bit is positioned substantially near a center of the semiconductor die.

40. The replaceable printer component of claim 34, wherein the first data item indicates to the controller whether a printer component is appropriate for use in the printing system.

41. The replaceable printer component of claim 34, wherein the first data item indicates a type of a printer component installed in the printing system.

42. The replaceable printer component of claim 41, wherein the first data item indicates.a type of cartridge installed in the printing system.

43. The replaceable printer component of claim 34, wherein the information storage device stores a second parity bit and a second data item, the second parity bit associated with the second data item, the second parity bit for use by the controller to determine whether an error is contained in the second data item.

44. The replaceable printer component of claim 34, wherein the information storage device is integrated with the printhead assembly.

45. The replaceable printer component of claim 13, wherein the information storage device is an integral memory, the component further comprising:
a semiconductor die; and
a plurality of circuits formed on the semiconductor die, each circuit associated with and indicating the state of a bit in the memory; the memory storing a plurality of functional bits that must match values expected by the printing system for proper operation of the printing system, the memory storing a plurality of informational bits that are not critical to proper operation of the printing system, wherein the circuits associated with the functional bits are positioned substantially near a center of the semiconductor die.

46. The replaceable inkjet printer component of claim 45, wherein substantially all of the circuits associated with the informational bits are positioned substantially outside of the center of the semiconductor die.

47. The replaceable inkjet printer component of claim 45, wherein the plurality of functional bits include bits representing a first data item that provides identifying information regarding the replaceable inkjet printer component, the bits representing the first data item useable by the printing system to determine whether the replaceable inkjet printer component is appropriate for use in the printing system, the circuits associated with the bits representing the first data item positioned substantially near a center of the semiconductor die.

48. The replaceable inkjet printer component of claim 45, wherein the replaceable inkjet printer component is an inkjet cartridge.

49. The replaceable inkjet printer component of claim 45, wherein the replaceable inkjet printer component is an inkjet printhead assembly.

50. The replaceable inkjet printer component of claim 45, wherein the replaceable inkjet printer component is an ink supply.

## Patentansprüche

1. Ein Verfahren zum Erfassen eines Fehlers bei Daten, die aus einem Speicher einer auswechselbaren Druckerkomponente (12) eines Druckers (10) erhalten wurden, wobei der Speicher (16) eine Mehrzahl von Bits umfasst, wobei der Drucker (10) eine Mehrzahl von elektrisch leitfähigen Leitungen (20), umfasst, wobei mindestens eine der elektrisch leitfähigen Leitungen (20) jedem Bit zuordbar ist, wobei das Verfahren folgende Schritte aufweist:
Bereitstellen eines ersten Paritätsbits (310C), das einem ersten Datenelement (310B) zuordbar ist, wobei das erste Datenelement (310B) und das erste Paritätsbit (310C) in dem Speicher (16) gespeichert sind;
Lesen des ersten Datenelements (310B) und des ersten Paritätsbits (310C) aus dem Speicher (16), wodurch ein elektrischer Test mindestens einer der elektrisch leitfähigen Leitungen (20) durchgeführt wird; und
Identifizieren eines Fehlers in dem ersten Datenelement (310B) basierend auf dem Lesen des ersten Paritätsbits (310C) aus dem Speicher und dem elektrischen Test.

2. Das Verfahren gemäß Anspruch 1, das ferner folgende Schritte aufweist:
Identifizieren eines elektrischen Kurzschlusses in mindestens einer der elektrisch leitfähigen Leitungen basierend auf dem elektrischen Test, und wobei der Fehler in dem ersten Datenelement basierend auf dem Lesen des ersten Paritätsbits aus dem Speicher und dem identifizierten elektrischen Kurzschluss identifiziert wird.

3. Das Verfahren gemäß Anspruch 1, das ferner folgende Schritte aufweist:
Identifizieren eines Leerlaufs in mindestens einer der elektrisch leitfähigen Leitungen basierend auf dem elektrischen Test, und wobei der Fehler in dem ersten Datenelement basierend auf dem Lesen des ersten Paritätsbits aus dem Speicher und dem identifizierten Leerlauf identifiziert wird.

4. Das Verfahren gemäß Anspruch 1, bei dem die elektrisch leitfähigen Leitungen Adressleitungen sind, die den Speicher mit einer Steuerung des Druckers koppeln.

5. Das Verfahren gemäß Anspruch 1, bei dem der Speicher ein ROM ist.

6. Das Verfahren gemäß Anspruch 1, das ferner folgende Schritte aufweist:
Bestimmen, ob die auswechselbare Druckerkomponente geeignet zur Verwendung in dem Drucker basierend auf dem ersten Datenelement ist.

7. Das Verfahren gemäß Anspruch 1, das ferner folgende Schritte aufweist:
Bestimmen eines Typs der auswechselbaren Druckerkomponente, die in den Drucker eingebaut ist, basierend auf dem ersten Datenelement.

8. Das Verfahren gemäß Anspruch 7, das ferner folgende Schritte aufweist:
Bestimmen eines Typs einer Kassette, die in den Drucker eingebaut ist, basierend auf dem ersten Datenelement.

9. Das Verfahren gemäß Anspruch 1, das ferner folgende Schritte aufweist:
Bereitstellen eines zweiten Paritätsbits, das einem zweiten Datenelement zuordbar ist, wobei das zweite Datenelement und das zweite Paritätsbit in dem Speicher gespeichert sind;
Lesen des zweiten Datenelements und des zweiten Paritätsbits aus dem Speicher;
Bestimmen, ob ein Fehler in dem zweiten Datenelement enthalten ist, basierend auf dem Lesen des zweiten Paritätsbits aus dem Speicher.

10. Das Verfahren gemäß Anspruch 1, bei dem der Speicher mit einer Kassette einstückig ist.

11. Das Verfahren gemäß Anspruch 1, bei dem der Speicher mit einer Druckkopfanordnung einstückig ist.

12. Das Verfahren gemäß Anspruch 1, bei dem der Speicher mit einer Tintenversorgung einstückig ist.

13. Eine auswechselbare Druckerkomponente (12) für ein Drucksystem mit einer Steuerung (35), wobei die auswechselbare Druckerkomponente (12) folgende Merkmale aufweist:
eine Informationsspeicherungsvorrichtung (16), die ein erstes Paritätsbit (310C) und ein erstes Datenelement (310B) speichert, wobei das erste Paritätsbit (310C) dem ersten Datenelement (310B) zuordbar ist, wobei das erste Paritätsbit (310C) zur Verwendung durch eine Steuerung (35) in Verbindung mit einem elektrischen Test von elektrisch leitfähigen Leitungen (20), die mit der Informationsspeicherungsvorrichtung (16) gekoppelt sind, vorgesehen ist, um einen Fehler in dem ersten Datenelement (310B) zu identifizieren.

14. Die auswechselbare Druckerkomponente gemäß Anspruch 13, bei der die elektrisch leitfähigen Leitungen Adressleitungen sind.

15. Die auswechselbare Druckerkomponente gemäß Anspruch 13, bei der die Informationsspeicherungsvorrichtung einen ROM (16A) aufweist.

16. Die auswechselbare Druckerkomponente gemäß Anspruch 13, bei der die Informationsspeicherungsvorrichtung einen Halbleiterchip (60) und eine Mehrzahl von auf dem Halbleiterchip gebildeten Schaltungen umfasst, wobei jede Schaltung einem Bit in der Informationsspeicherungsvorrichtung zuordbar ist und den Zustand desselben anzeigt.

17. Die auswechselbare Druckerkomponente gemäß Anspruch 16, bei der die Schaltungen, die dem ersten Datenelement zuordbar sind, im Wesentlichen in der Nähe eines Zentrums des Halbleiterchips angeordnet sind.

18. Die auswechselbare Druckerkomponente gemäß Anspruch 16, bei der die Schaltung, die dem ersten Paritätsbit zuordbar ist, im Wesentlichen in der Nähe eines Zentrums des Halbleiterchips angeordnet ist.

19. Die auswechselbare Druckerkomponente gemäß Anspruch 13, bei der das erste Datenelement der Steuerung anzeigt, ob eine Druckerkomponente geeignet zur Verwendung in dem Drucksystem ist.

20. Die auswechselbare Druckerkomponente gemäß Anspruch 13, wobei die auswechselbare Druckerkomponente eine Kassette (12) ist.

21. Die auswechselbare Druckerkomponente gemäß Anspruch 13, wobei die auswechselbare Druckerkomponente eine Druckkopfanordnung (14) umfasst.

22. Die auswechselbare Druckerkomponente gemäß Anspruch 13, wobei die auswechselbare Druckerkomponente eine Tintenversorgung (26) umfasst.

23. Die auswechselbare Druckerkomponente gemäß Anspruch 13, bei der das erste Datenelement einen Typ einer Druckerkomponente, die in das Drucksystem eingebaut ist, anzeigt.

24. Die auswechselbare Druckerkomponente gemäß Anspruch 23, bei der das erste Datenelement den Typ einer der folgenden Druckerkomponenten anzeigt:
eine Kassette (16);
eine Druckkopfanordnung (14); oder
eine Tintenversorgung (26).

25. Die auswechselbare Druckerkomponente gemäß Anspruch 13, bei der die Informationsspeicherungsvorrichtung ein zweites Paritätsbit und ein zweites Datenelement speichert, wobei das zweite Paritätsbit dem zweiten Datenelement zuordbar ist, wobei das zweite Paritätsbit zur Verwendung durch die Steuerung vorgesehen ist, um zu bestimmen, ob ein Fehler in dem zweiten Datenelement enthalten ist.

26. Ein Drucksystem, das die auswechselbare Druckerkomponente gemäß Anspruch 13 einsetzt, das ferner folgende Merkmale aufweist:
eine Steuerung, die durch die Mehrzahl von elektrisch leitfähigen Leitungen mit der Informationsspeicherungsvorrichtung gekoppelt ist, wobei die Steuerung auf eine Ausgabe der Informationsspeicherungsvorrichtung, die die Steuerung umfasst, die konfiguriert ist, um einen elektrischen Test mindestens einer der elektrisch leitfähigen Leitungen durchzuführen, anspricht, wobei der Prozessor konfiguriert ist, um einen Fehler in dem ersten Datenelement zu identifizieren, basierend auf dem ersten Paritätsbit und dem elektrischen Test.

27. Das Drucksystem gemäß Anspruch 26, bei dem die Steuerung konfiguriert ist, um einen elektrischen Kurzschluss in mindestens einer der elektrisch leitfähigen Leitungen zu identifizieren, basierend auf dem elektrischen Test, und bei dem die Steuerung konfiguriert ist, um den Fehler in dem ersten Datenelement zu identifizieren, basierend auf dem ersten Paritätsbit und dem identifizierten elektrischen Kurzschluss.

28. Das Drucksystem gemäß Anspruch 26, bei dem die Steuerung konfiguriert ist, um einen Leerlauf in mindestens einer der elektrisch leitfähigen Leitungen zu identifizieren, basierend auf dem elektrischen Test, und bei dem die Steuerung konfiguriert ist, um den Fehler in dem ersten Datenelement zu identifizieren, basierend auf dem ersten Paritätsbit und dem identifizierten Leerlauf.

29. Das Drucksystem gemäß Anspruch 26, bei dem die Steuerung konfiguriert ist, um zu bestimmen, ob eine Druckerkomponente geeignet zur Verwendung in dem Drucksystem ist, basierend auf dem ersten Datenelement.

30. Das Drucksystem gemäß Anspruch 26, bei dem die Steuerung konfiguriert ist, um einen Typ einer Druckerkomponente, die in das Drucksystem eingebaut ist, zu bestimmen, basierend auf dem ersten Datenelement.

31. Das Drucksystem gemäß Anspruch 30, bei dem die Steuerung konfiguriert ist, um, basierend auf dem ersten Datenelement, den Typ einer der folgenden Druckerkomponenten zu bestimmen:
eine Kassette (16);
eine Druckkopfanordnung (14); oder
eine Tintenversorgung (26).

32. Das Drucksystem gemäß Anspruch 26, bei dem die Steuerung konfiguriert ist, um zu bestimmen, ob ein Fehler in dem zweiten Datenelement enthalten ist, basierend auf dem zweiten Paritätsbit.

33. Das Drucksystem gemäß Anspruch 26, bei dem die Steuerung konfiguriert ist, um den Fehler in dem ersten Datenelement zu korrigieren, basierend auf dem elektrischen Test und dem ersten Paritätsbit.

34. Die auswechselbare Druckerkomponente gemäß Anspruch 20, die ferner folgende Merkmale aufweist:
eine Druckkopfanordnung, die mindestens einen Druckkopf zum selektiven Aufbringen von Tintentropfen auf Druckmedien aufweist; und
eine Tintenversorgung zum Speichern von Tinte, die dem Druckkopf bereitgestellt werden soll.

35. Die auswechselbare Druckerkomponente gemäß Anspruch 34, bei der die elektrisch leitfähigen Leitungen Adressleitungen sind.

36. Die auswechselbare Druckerkomponente gemäß Anspruch 34, bei der die Informationsspeicherungsvorrichtung ein ROM ist.

37. Die auswechselbare Druckerkomponente gemäß Anspruch 36, bei der der ROM einen Halbleiterchip und eine Mehrzahl von auf dem Halbleiterchip gebildeten Schaltungen umfasst, wobei jede Schaltung einem Bit in dem ROM zuordbar ist und den Zustand desselben anzeigt.

38. Die auswechselbare Druckerkomponente gemäß Anspruch 37, bei der die Schaltungen, die dem ersten Datenelement zuordbar sind, im Wesentlichen in der Nähe eines Zentrums des Halbleiterchips angeordnet sind.

39. Die auswechselbare Druckerkomponente gemäß Anspruch 37, bei der die Schaltung, die dem ersten Paritätsbit zuordbar ist, im Wesentlichen in der Nähe eines Zentrums des Halbleiterchips angeordnet ist.

40. Die auswechselbare Druckerkomponente gemäß Anspruch 34, bei der das erste Datenelement der Steuerung anzeigt, ob eine Druckerkomponente geeignet zur Verwendung in dem Drucksystem ist.

41. Die auswechselbare Druckerkomponente gemäß Anspruch 34, bei der das erste Datenelement einen Typ einer Druckerkomponente, die in das Drucksystem eingebaut ist, anzeigt.

42. Die auswechselbare Druckerkomponente gemäß Anspruch 41, bei der das erste Datenelement einen Typ einer Kassette, die in das Drucksystem eingebaut ist, anzeigt.

43. Die auswechselbare Druckerkomponente gemäß Anspruch 34, bei der die Informationsspeicherungsvorrichtung ein zweites Paritätsbit und ein zweites Datenelement speichert, wobei das zweite Paritätsbit dem zweiten Datenelement zuordbar ist, wobei das zweite Paritätsbit zur Verwendung durch die Steuerung vorgesehen ist, um zu bestimmen, ob ein Fehler in dem zweiten Datenelement enthalten ist.

44. Die auswechselbare Druckerkomponente gemäß Anspruch 34, bei der die Informationsspeicherungsvorrichtung mit der Druckkopfanordnung einstückig ist.

45. Die auswechselbare Druckerkomponente gemäß Anspruch 13, bei der die Informationsspeicherungsvorrichtung ein einstückiger Speicher ist, wobei die Komponente ferner folgende Merkmale aufweist:
einen Halbleiterchip; und
eine Mehrzahl von auf dem Halbleiterchip gebildeten Schaltungen, wobei jede Schaltung einem Bit in dem Speicher zuordbar ist und den Zustand desselben anzeigt; wobei der Speicher eine Mehrzahl von Funktionsbits speichert, die mit Werten übereinstimmen müssen, die durch das Drucksystem zum ordnungsgemäßen Betrieb des Drucksystems erwartet werden, wobei der Speicher eine Mehrzahl von Informationsbits speichert, die nicht kritisch für den ordnungsgemäßen Betrieb des Drucksystems sind, wobei die Schaltungen, die den Funktionsbits zuordbar sind, im Wesentlichen in der Nähe eines Zentrums des Halbleiterchips angeordnet sind.

46. Die auswechselbare Tintenstrahldruckerkomponente gemäß Anspruch 45, bei der im Wesentlichen alle Schaltungen, die Informationsbits zuordbar sind, im Wesentlichen außerhalb des Zentrums des Halbleiterchips angeordnet sind.

47. Die auswechselbare Tintenstrahldruckerkomponente gemäß Anspruch 45, bei der die Mehrzahl von Funktionsbits Bits umfasst, die ein erstes Datenelement repräsentieren, das Identifikationsinformationen bezüglich der auswechselbaren Tintenstrahldruckerkomponente bereitstellt, wobei die Bits das erste Datenelement, das durch das Druckersystem verwendbar ist, um zu bestimmen, ob die auswechselbare Tintenstrahldruckerkomponente geeignet zur Verwendung in dem Drucksystem ist, repräsentieren, wobei die Schaltungen, die den Bits zuordbar sind, die das erste Datenelement repräsentieren, im Wesentlichen in der Nähe eines Zentrums des Halbleiterchips angeordnet sind.

48. Die auswechselbare Tintenstrahldruckerkomponente gemäß Anspruch 45, wobei die auswechselbare Tintenstrahldruckerkomponente eine Tintenstrahlkassette ist.

49. Die auswechselbare Tintenstrahldruckerkomponente gemäß Anspruch 45, wobei die auswechselbare Tintenstrahldruckerkomponente eine Tintenstrahldruckkopfanordnung ist.

50. Die auswechselbare Tintenstrahldruckerkomponente gemäß Anspruch 45, wobei die auswechselbare Tintenstrahldruckerkomponente eine Tintenversorgung ist.

## Revendications

1. Méthode de détection d'une erreur dans des données reçues d'une mémoire d'une pièce de rechange (12) d'une imprimante (10), la mémoire (16) comprenant une pluralité de bits, l'imprimante (10) comprenant une pluralité de lignes conductrices (20), au moins une des lignes conductrices (20) étant associée à chaque bit, la méthode comprenant :
■ l'utilisation d'un premier bit de parité (2106) associé à un premier élément de données (310B), le premier élément de données (310B) et le premier bit de parité (310C) étant stockés dans la mémoire (16) ;
■ la lecture du premier élément de données (310B) et du premier bit de parité (310C) de la mémoire (16) ;
■ l'application d'un test électrique d'au moins une des lignes conductrices (20) ; et
■ l'identification d'une erreur dans le premier élément de données (310B) sur la base du premier bit de parité (310C) lu de la mémoire et du test électrique.

2. Méthode selon la revendication 1, et comprenant en outre :
■ l'identification d'un court-circuit électrique dans au moins une des lignes conductrices sur la base du test électrique et dans laquelle l'erreur dans le premier élément de données est identifiée sur la base du premier bit de parité lu de la mémoire et du court-circuit électrique identifié.

3. Méthode selon la revendication 1, et comprenant en outre :
**■** l'identification d'un circuit ouvert dans au moins une des lignes conductrices sur la base du test électrique et dans laquelle l'erreur dans le premier élément de données est identifiée sur la base du premier bit de parité lu de la mémoire et du circuit ouvert identifié.

4. Méthode selon la revendication 1, dans laquelle les lignes conductrices sont des lignes d'adresse couplant la mémoire à un dispositif de contrôle de l'imprimante.

5. Méthode selon la revendication 1, dans laquelle la mémoire est un mémoire morte.

6. Méthode selon la revendication 1, et comprenant en outre:
■ la détermination que la pièce de rechange de l'imprimante est approprié ou non pour servir dans l'imprimante sur la base du premier élément de données.

7. Méthode selon la revendication 1, et comprenant en outre :
■ la détermination du type de pièce de rechange de l'imprimante installé dans l'imprimante sur la base du premier élément de données.

8. Méthode selon la revendication 7, et comprenant en outre :
■ la détermination du type de cartouche installé dans l'imprimante sur la base du premier élément de données.

9. Méthode selon la revendication 1, et comprenant en outre:
■ l'utilisation d'un second bit de parité associé à un second élément de données, le second élément de données et le second bit de parité étant stockés dans la mémoire ;
■ la lecture du second élément de données et du second bit de parité de la mémoire ;
■ la détermination qu'une erreur est contenue ou non dans le second élément de données sur la base du second bit de parité lu de la mémoire.

10. Méthode selon la revendication 1, dans laquelle la mémoire est intégrée à une cartouche.

11. Méthode selon la revendication 1, dans laquelle la mémoire est intégrée à un assemblage de tête d'impression.

12. Méthode selon la revendication 1, dans laquelle la mémoire est intégrée à une alimentation en encre.

13. Pièce de rechange (12) d'une imprimante destinée à un système d'impression ayant un dispositif de contrôle (35), la pièce de rechange (12) de l'imprimante comprenant :
■ un dispositif de stockage d'informations (16) stockant un premier bit de parité (310C) et un premier élément de données (310B), le premier bit de parité (310C) étant associé au premier élément de données (310B), le premier bit de parité (310C) étant destiné à être utilisé par un dispositif de contrôle (35) conjointement avec un test électrique de lignes conductrices (20) couplées au dispositif de stockage d'informations (16) pour identifier une erreur dans le premier élément de données (310B).

14. Pièce de rechange d'une imprimante selon la revendication 13, dans lequel les lignes conductrices sont des lignes d'adresse.

15. Pièce de rechange d'une imprimante selon la revendication 13, dans lequel le dispositif de stockage d'informations comprend une mémoire morte (16A).

16. Pièce de rechange d'une imprimante selon la revendication 13, dans lequel le dispositif de stockage d'informations comprend une matrice semi-conductrice (60) et une pluralité de circuits formés sur la matrice semi-conductrice, chaque circuit étant associé à et indiquant l'état d'un bit dans le dispositif de stockage d'informations.

17. Pièce de rechange d'une imprimante selon la revendication 16, dans lequel les circuits associés au premier élément de données sont positionnés sensiblement près d'un centre de la matrice semi-conductrice.

18. Pièce de rechange d'une imprimante selon la revendication 16, dans lequel le circuit associé au premier bit de parité est positionné sensiblement près d'un centre de la matrice semi-conductrice.

19. Pièce de rechange d'une imprimante selon la revendication 13, dans lequel le premier élément de données indique au dispositif de contrôle si un composant de l'imprimante est approprié pour servir dans le système d'impression.

20. Pièce de rechange d'une imprimante selon la revendication 13, dans lequel la pièce de rechange de l'imprimante est une cartouche (12).

21. Pièce de rechange d'une imprimante selon la revendication 13, dans lequel la pièce de rechange de l'imprimante comprend un assemblage de tête d'impression (14).

22. Pièce de rechange d'une imprimante selon la revendication 13, dans lequel la pièce de rechange de l'imprimante comprend une alimentation en encre (26).

23. Pièce de rechange d'une imprimante selon la revendication 13, dans lequel le premier élément de données indique un type de composant de l'imprimante installé dans le système d'impression.

24. Pièce de rechange d'une imprimante selon la revendication 23, dans lequel le premier élément de données indique le type d'un des composants suivants de l'imprimante :
■ une cartouche (16) ;
■ un assemblage de tête d'impression (14) ; ou
■ une alimentation en encre (26).

25. Pièce de rechange d'une imprimante selon la revendication 13, dans lequel le dispositif de stockage d'informations stocke un second bit de parité et un second élément de données, le second bit de parité étant associé au second élément de données, le second bit de parité étant destiné à être utilisé par le dispositif de contrôle pour déterminer si une erreur est contenue dans le second élément de données.

26. Système d'impression utilisant la pièce de rechange d'une imprimante selon la revendication 13, comprenant en outre :
■ un dispositif de contrôle couplé au dispositif de stockage d'informations par la pluralité de lignes conductrices, le dispositif de contrôle étant sensible à la sortie du dispositif de stockage d'informations, qui comprend le dispositif de contrôle configuré pour réaliser un test électrique d'au moins une des lignes conductrices, le processeur étant configuré pour identifier une erreur dans le premier élément de données sur la base du premier bit de parité et du test électrique.

27. Système d'impression selon la revendication 26, dans lequel le dispositif de contrôle est configuré pour identifier un court-circuit électrique dans au moins une des lignes conductrices sur la base du test électrique, et dans lequel le dispositif de contrôle est configuré pour identifier l'erreur dans le premier élément de données sur la base du premier bit de parité et du court-circuit électrique identifié.

28. Système d'impression selon la revendication 26, dans lequel le dispositif de contrôle est configuré pour identifier un circuit ouvert dans au moins une des lignes conductrices sur la base du test électrique, et dans lequel le dispositif de contrôle est configuré pour identifier l'erreur dans le premier élément de données sur la base du premier bit de parité et du circuit ouvert identifié.

29. Système d'impression selon la revendication 26, dans lequel le dispositif de contrôle est configuré pour déterminer si un composant d'une imprimante est approprié pour servir dans le système d'impression sur la base du premier élément de données.

30. Système d'impression selon la revendication 26, dans lequel le dispositif de contrôle est configuré pour déterminer un type de composant d'une imprimante installé dans le système d'impression sur la base du premier élément de données.

31. Système d'impression selon la revendication 30, dans lequel le dispositif de contrôle est configuré pour déterminer, sur la base du premier élément de données, le type d'un des composants suivants de l'imprimante :
■ une cartouche (16) ;
■ un assemblage de tête d'impression (14) ; ou
■ une alimentation en encre (26).

32. Système d'impression selon la revendication 26, et dans lequel le dispositif de contrôle est configuré pour déterminer si une erreur est contenue dans le second élément de données sur la base du second bit de parité.

33. Système d'impression selon la revendication 26, dans lequel le dispositif de contrôle est configuré pour corriger l'erreur dans le premier élément de données sur la base du test électrique et du premier bit de parité.

34. Pièce de rechange d'une imprimante selon la revendication 20, comprenant en outre :
■ un assemblage de tête d'impression disposant d'au moins une tête d'impression pour déposer de manière sélective des gouttes d'encre sur un support d'impression ; et
■ une alimentation en encre pour stocker l'encre à fournir à la tête d'impression.

35. Pièce de rechange d'une imprimante selon la revendication 34, dans lequel les lignes conductrices sont des lignes d'adresse.

36. Pièce de rechange d'une imprimante selon la revendication 34, dans lequel le dispositif de stockage d'informations est une mémoire morte.

37. Pièce de rechange d'une imprimante selon la revendication 36, dans lequel la mémoire morte comprend une matrice semi-conductrice et une pluralité de circuits formés sur la matrice semi-conductrice, chaque circuit étant associé à et indiquant l'étant d'un bit dans la mémoire morte.

38. Pièce de rechange d'une imprimante selon la revendication 37, dans lequel les circuits associés au premier élément de données sont positionnés sensiblement près d'un centre de la matrice semi-conductrice.

39. Pièce de rechange d'une imprimante selon la revendication 37, dans lequel le circuit associé au premier bit de parité est positionné sensiblement près d'un centre de la matrice semi-conductrice.

40. Pièce de rechange d'une imprimante selon la revendication 34, dans lequel le premier élément de données indique au dispositif de contrôle si un composant de l'imprimante est approprié pour servir dans le système d'impression.

41. Pièce de rechange d'une imprimante selon la revendication 34, dans lequel le premier élément de données indique un type du composant de l'imprimante installé dans le système d'impression.

42. Pièce de rechange d'une imprimante selon la revendication 41, dans lequel le premier élément de données indique un type de cartouche installée dans le système d'impression.

43. Pièce de rechange d'une imprimante selon la revendication 34, dans lequel le dispositif de stockage d'informations stocke un second bit de parité et un second élément de données, le second bit de parité étant associé au second élément de données, le second bit de parité étant destiné à être utilisé par le dispositif de contrôle pour déterminer si une erreur est contenue dans le second élément de données.

44. Pièce de rechange d'une imprimante selon la revendication 34, dans lequel le dispositif de stockage d'informations est intégré à l'assemblage de tête d'impression.

45. Pièce de rechange d'une imprimante selon la revendication 13, dans lequel le dispositif de stockage d'informations est une mémoire intégrale, le composant comprenant en outre :
■ une matrice semi-conductrice ; et
■ une pluralité de circuits formés sur la matrice semi-conductrice, chaque circuit étant associé à et indiquant l'état d'un bit dans la mémoire ; la mémoire stockant une pluralité de bits fonctionnels qui doivent correspondre aux valeurs prévues par le système d'impression pour un fonctionnement correct du système d'impression, la mémoire stockant une pluralité de bits d'information qui ne sont pas critiques au fonctionnement correct du système d'impression, dans lequel les circuits associés aux bits fonctionnels sont positionnés sensiblement près d'un centre de la matrice semi-conductrice.

46. Pièce de rechange d'une imprimante à jet d'encre selon la revendication 45, dans lequel sensiblement tous les circuits associés aux bits d'information sont positionnés sensiblement à l'extérieur du centre de la matrice semi-conductrice.

47. Pièce de rechange d'une imprimante à jet d'encre selon la revendication 45, dans lequel la pluralité de bits fonctionnels comprennent des bits représentant un premier élément de données qui fournit l'identification des informations concernant la pièce de rechange de l'imprimante à jet d'encre, les bits représentant le premier élément de données utilisable par le système d'impression pour déterminer si la pièce de rechange de l'imprimante à jet d'encre est approprié pour servir dans le système d'impression, les circuits associés aux bits représentant le premier élément de données positionné sensiblement près d'un centre de la matrice semi-conductrice.

48. Pièce de rechange d'une imprimante à jet d'encre selon la revendication 45, dans lequel la pièce de rechange de l'imprimante à jet d'encre est une cartouche à jet d'encre.

49. Pièce de rechange d'une imprimante à jet d'encre selon la revendication 45, dans lequel la pièce de rechange de l'imprimante à jet d'encre est un assemblage de tête d'impression à jet d'encre.

50. Pièce de rechange d'une imprimante à jet d'encre selon la revendication 45, dans lequel la pièce de rechange de l'imprimante à jet d'encre est une alimentation en encre.
